# FASCICULE DE BREVET EUROPEEN

(11) **EP 3 913 578 B1**
(45) Date de publication et mention de la délivrance du brevet: **12.11.2025**
(21) Numéro de dépôt: 21174611.0
(22) Date de dépôt: 19.05.2021
(51) Int. Cl.: G06T 7/33

(54) **PROCÉDÉ ET SYSTÈME DE RECALAGE D'IMAGES CONTENANT DES STRUCTURES ANATOMIQUES**
VERFAHREN UND VORRICHTUNG ZUR REGISTRIERUNG VON BILDERN, DIE ANATOMISCHE STRUKTUREN ENTHALTEN
METHOD AND SYSTEM FOR REGISTRATION OF IMAGES CONTAINING ANATOMICAL STRUCTURES

(30) Priorité: 20.05.2020 FR 2005371
(43) Date de publication de la demande: 24.11.2021
(73) Titulaire: THERENVA, 35000 Rennes (FR)
(72) Inventeur: LALYS, Florent, 35000 RENNES (FR); COLLEAUX, Mathieu, 35200 RENNES (FR); GRATSAC, Vincent, 35235 THORIGNÉ-FOUILLARD (FR)
(74) Mandataire: Vidon Brevets & Stratégie

(56) Documents cités:
- EP-A1- 3 121 789
- WO-A2-03/088143
- DE-A1- 10 323 008
- US-A1- 2019 050 999
- ROBERT GRUPP ET AL: "Automatic Annotation of Hip Anatomy in Fluoroscopy for Robust and Efficient 2D/3D Registration", ARXIV.ORG, CORNELL UNIVERSITY LIBRARY, 201 OLIN LIBRARY CORNELL UNIVERSITY ITHACA, NY 14853, 16 November 2019 (2019-11-16), XP081533959
- LI YANG ET AL: "C-arm based image-guided percutaneous puncture of minimally invasive spine surgery", 2017 10TH INTERNATIONAL CONGRESS ON IMAGE AND SIGNAL PROCESSING, BIOMEDICAL ENGINEERING AND INFORMATICS (CISP-BMEI), IEEE, 14 October 2017 (2017-10-14), pages 1 - 5, XP033326509, DOI: 10.1109/CISP-BMEI.2017.8302188
- MARKELJ P ET AL: "A review of 3D/2D registration methods for image-guided interventions", MEDICAL IMAGE ANALYSIS, OXFORDUNIVERSITY PRESS, OXFORD, GB, vol. 16, no. 3, April 2012 (2012-04-01), pages 642 - 661, XP002696430, ISSN: 1361-8423, [retrieved on 20100413], DOI: 10.1016/J.MEDIA.2010.03.005
- MAINTZ J B A ET AL: "A SURVEY OF MEDICAL IMAGE REGISTRATION", MEDICAL IMAGE ANALYSIS, OXFORDUNIVERSITY PRESS, OXFORD, GB, vol. 2, no. 1, 1998, pages 1 - 37, XP001032679, ISSN: 1361-8423, DOI: 10.1016/S1361-8415(01)80026-8

## Description

La présente invention concerne un procédé de recalage entre une première image tridimensionnelle acquise selon un premier mode d'acquisition, et comprenant des structures anatomiques d'un patient et une deuxième image bidimensionnelle, acquise selon un deuxième mode d'acquisition.

L'invention concerne également un système de recalage d'images associé.

L'invention trouve une application particulière dans le domaine de l'imagerie médicale.

Depuis de nombreuses années, des techniques d'imagerie médicale ont été développées, notamment dans le domaine des interventions chirurgicales, pour permettre des interventions les moins invasives possibles.

De manière classique, afin d'améliorer l'assistance apportée durant la phase opératoire, il a été proposé d'utiliser des données d'image tridimensionnelles (ou images 3D), acquises pendant une phase préopératoire ou phase de planification, obtenues par des techniques d'acquisition comme par exemple la tomographie également appelée CT pour « computed tomography » ou l'imagerie par résonance magnétique (IRM). En effet, bien souvent, l'information bidimensionnelle concernant les organes n'est pas suffisante et les opérations requièrent une connaissance tridimensionnelle. Ces images 3D sont acquises avant l'intervention pour le diagnostic de la maladie.

En cours d'intervention, dans la phase dite peropératoire, des images bidimensionnelles sont acquises en temps réel, par radiographie, par exemple par fluoroscopie ou par angiographie.

L'exploitation des informations tridimensionnelles générées en phase préopératoire lors de la navigation peropératoire nécessite une mise en correspondance de l'image tridimensionnelle acquise selon un premier mode d'acquisition (ou première modalité) avec l'imagerie bidimensionnelle (2D) acquise pendant la phase d'intervention, selon un deuxième mode d'acquisition (ou deuxième modalité). La mise en correspondance est effectuée grâce à un processus de recalage qui permet d'exprimer les différentes données dans un même référentiel spatial.

Après recalage spatial, les images pré-opératoires et peropératoires peuvent être fusionnées et affichées pour apporter des informations facilement interprétables par le chirurgien.

Il existe des systèmes de chirurgie guidée par l'image destinés à des salles d'opération dites hybrides, comprenant un dispositif d'acquisition d'images mobile comprenant un support d'un dispositif d'acquisition d'image apte à tourner autour du patient pour l'acquisition d'images, par exemple par rayons X. Un tel dispositif de support connu sous le nom C-arm rotationnel motorisé, est par exemple utilisé en angiographie rotationnelle. Lorsque le dispositif est motorisé, la mise à jour du recalage entre image pré-opératoires et images peropératoires peut être entièrement automatisée, et l'opérateur peut aisément changer les angles du C-arm ou déplacer la table du patient sans remettre en cause la fusion d'image.

Cependant, l'utilisation d'un C-arm rotationnel motorisé n'est pas pratique dans une salle d'opération, et peut gêner les mouvements du praticien. De plus, un tel équipement est cher et de nombreux hôpitaux ne peuvent pas en être équipés.

Dans la plupart des cas, les salles d'opération sont équipées d'un C-arm conventionnel, mobile et non motorisé, qui est un équipement plus léger et moins coûteux. Les objectifs d'assistance sont les mêmes qu'avec les C-arm motorisés, mais la fusion d'image n'est plus entièrement automatisée. Dans ce cas, le recalage est effectué entre l'image 3D acquise dans la phase préopératoire et les images 2D acquises pendant l'opération, et une mise à jour du recalage est nécessaire à chaque mouvement du patient, de la table ou du dispositif C-arm. Usuellement, dans le cas d'utilisation d'un C-arm conventionnel, un opérateur (e.g. le chirurgien) doit renseigner la position spatiale relative du C-arm par rapport au patient pour initialiser le recalage.

Le document « Automatic Annotation of Hip Anatomy in Fluoroscopy for Robust and Efficient 2D/3D Registration » - XP081533959 (R. GRUPP ET AL - 16/11/2019) décrit l'acquisition d'images par fluoroscopie pour guider la chirurgie de la hanche, et un recalage automatique entre images pré-opératoires 3D et images intra-opératoires obtenues par fluoroscopie. Les images pré-opératoires 3D sont obtenues par CT-scan. Des réseaux de neurones entraînés pour segmenter simultanément des structures anatomiques et identifier des repères pour le recalage sont utilisés.

En effet, l'obtention d'un recalage avec une bonne précision entre images de diverses modalités, par des technologies de traitement d'image, demeure un problème difficile à résoudre, dans la mesure où les positions d'acquisition d'images, par rapport à la position du patient, entre la première acquisition et la deuxième acquisition peuvent différer assez substantiellement en termes de rotation, translation et zoom. Pour un bon résultat d'un algorithme recalage utilisant du traitement d'image, les images à recaler fournies en entrée ne doivent pas, dans leur positionnement relatif (translation, rotation), dépasser les marges de fonctionnement de l'algorithme de recalage.

A cet effet, il est utile d'appliquer une initialisation du recalage par une transformation spatiale rigide d'initialisation, définie par 6 paramètres (ou 6 degrés de liberté) comprenant de paramètres de translation et des paramètres de rotation. L'application d'une telle transformation permet un premier recalage entre les images, afin d'appliquer ensuite avec succès un deuxième recalage de raffinement.

L'invention a pour objet l'amélioration du recalage par détermination automatique des paramètres de la transformation spatiale rigide, sans intervention d'un opérateur.A cet effet, l'invention propose, selon un aspect, un procédé de recalage entre une première image tridimensionnelle acquise selon un premier mode d'acquisition, et comprenant des structures anatomiques d'un patient et une deuxième image bidimensionnelle, acquise selon un deuxième mode d'acquisition par un dispositif d'acquisition d'images monté sur un arceau de scopie mobile en rotation et en translation, la deuxième image comprenant une partie des structures anatomiques dudit patient, le recalage mettant en œuvre une transformation spatiale rigide définie par des paramètres de rotation et de translation ; Ce procédé est mis en œuvre par un processeur d'un dispositif électronique programmable et étant caractérisé en ce qu'il comporte des étapes de :

-détection automatique des structures anatomiques dans l'image bidimensionnelle par application d'un premier réseau de neurones de détection ; entraîné sur une base de données générique,

-estimation, à partir des structures anatomiques détectées automatiquement dans ladite deuxième image bidimensionnelle, par application d'au moins un réseau de neurones de classification préalablement entraîné sur une base de données générique, des paramètres de rotation et de translation de ladite transformation spatiale rigide,

-recalage iconique 3D/2D entre la première image tridimensionnelle et la deuxième image bidimensionnelle en partant d'une initialisation avec ladite transformation spatiale rigide.

Avantageusement, le procédé de l'invention permet d'obtenir automatiquement des angles de rotation et des paramètres de translation caractérisant une transformation spatiale rigide à appliquer pour recaler la première image et la deuxième image dans un même référentiel, avec un premier réseau de neurones de détection et au moins un deuxième réseau de neurones de classification, sans nécessiter d'entraînement spécifique des réseaux de neurones sur des données du patient.

Avantageusement, les ressources mémoire et calculatoires utilisées sont ainsi diminuées.

Le procédé de recalage selon l'invention peut également présenter une ou plusieurs des caractéristiques ci-dessous, prises indépendamment ou selon toutes les combinaisons techniquement envisageables :

Les structures anatomiques sont classées en une pluralité de catégories de structures anatomiques prédéterminées, et dans lequel l'estimation des paramètres de la transformation rigide comporte la mise en œuvre d'un deuxième réseau de neurones de classification par catégorie de structures anatomiques pour obtenir des paramètres de transformation estimés par catégorie de structures anatomiques.

L'estimation comporte :
- une première estimation, à partir de structures anatomiques détectées automatiquement dans ladite deuxième image bidimensionnelle, par application d'au moins un réseau de neurones de classification, d'un premier angle de rotation et d'un deuxième angle de rotation de ladite transformation spatiale rigide, caractérisant la position de l'arceau de scopie,
- une deuxième estimation de paramètres de translation, d'un troisième angle de rotation et d'un facteur de zoom de ladite transformation spatiale rigide, la deuxième estimation utilisant le résultat de la première estimation.

Un réseau de neurones de classification est appliqué par catégorie de structures anatomiques pour obtenir un premier angle de rotation et un deuxième angle de rotation estimés par catégorie de structures anatomiques, le procédé comportant en outre une fusion des premiers angles de rotation estimés par catégorie de structures anatomiques pour obtenir ledit premier angle de rotation estimé et une fusion des deuxièmes angles de rotation estimés par catégorie de structures anatomiques pour obtenir ledit deuxième paramètre estimé.

Chaque fusion consiste en un calcul de valeur moyenne ou en un calcul de valeur médiane.

La deuxième estimation comprend :
- une génération d'une troisième image bidimensionnelle obtenue à partir de la première image tridimensionnelle en appliquant lesdits premier et deuxième angles de rotation,
- une détection automatique de structures anatomiques sur ladite troisième image, et
- un appariement entre les structures des dites deuxième et troisième images bidimensionnelles pour obtenir lesdits paramètres de translation, le troisième angle de rotation et le facteur de zoom de ladite transformation spatiale rigide.

La détection de structures anatomiques dans ladite troisième image bidimensionnelle est effectuée par application dudit premier réseau de neurones de détection.

Les structures anatomiques sont des structures osseuses obtenues sur une deuxième image bidimensionnelle acquise par fluoroscopie.

Les structures anatomiques sont des structures vasculaires obtenues sur une deuxième image bidimensionnelle acquise par angiographie.

La première image tridimensionnelle est acquise selon un premier mode d'acquisition parmi la tomographie, IRM, échographie 3D ou imagerie volumétrique par faisceau conique.

Selon un autre aspect, l'invention concerne un programme d'ordinateur comportant des instructions logicielles qui, lorsqu'elles sont implémentées par un dispositif électronique programmable, mettent en œuvre un procédé de recalage entre une première image tridimensionnelle acquise selon un premier mode d'acquisition, et comprenant des structures anatomiques d'un patient et une deuxième image bidimensionnelle, acquise selon un deuxième mode d'acquisition tel que brièvement décrit ci-dessus.

Selon un autre aspect, l'invention concerne un dispositif de recalageentre une première image tridimensionnelle acquise selon un premier mode d'acquisition, et comprenant des structures anatomiques d'un patient et une deuxième image bidimensionnelle, acquise selon un deuxième mode d'acquisition par un dispositif d'acquisition d'images monté sur un arceau de scopie mobile en rotation et en translation, la deuxième image comprenant une partie des structures anatomiques dudit patient, le recalage mettant en œuvre une transformation spatiale rigide définie par des paramètres de rotation et de translation. Ce dispositif comporte un processeur configuré pour mettre en œuvre :
- un module détection automatique des structures anatomiques dans l'image bidimensionnelle par application d'un premier réseau de neurones de détection ; entraîné sur une base de données générique,
- un module estimation, à partir des structures anatomiques détectées automatiquement dans ladite deuxième image bidimensionnelle, par application d'au moins un réseau de neurones de classification préalablement entraîné sur une base de données générique, des paramètres de rotation et de translation de ladite transformation spatiale rigide,
- un module de recalage iconique 3D/2D entre la première image tridimensionnelle et la deuxième image bidimensionnelle en partant d'une initialisation avec ladite transformation spatiale rigide

Le dispositif de recalage est configuré pour mettre en œuvre le procédé de recalage tel que brièvement décrit ci-dessus, dans toutes ses variantes de mise en œuvre.Selon un autre aspect, l'invention concerne un système de recalage entre une première image tridimensionnelle acquise selon un premier mode d'acquisition, et comprenant des structures anatomiques d'un patient et une deuxième image bidimensionnelle, acquise selon un deuxième mode d'acquisition, le système comportant un dispositif d'acquisition d'images monté sur un arceau de scopie mobile en rotation et en translation, la deuxième image comprenant une partie des structures anatomiques dudit patient, le recalage mettant en œuvre une transformation spatiale rigide définie par des paramètres de rotation et de translation, et un dispositif de recalage d'images tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[fig.1] la figure 1 représente schématiquement un système d'acquisition d'images comprenant un dispositif d'acquisition mobile;
[fig.2] la figure 2 est un synoptique des principaux blocs d'un dispositif programmable apte à mettre en œuvre le procédé de l'invention ;
[fig.3] la figure 3 est un organigramme des principales étapes d'un procédé de recalage d'images selon un mode de réalisation ;
[fig.4] la figure 4 est un organigramme des étapes de détection des structures anatomiques et d'estimation des angles de rotation dans un mode de réalisation.

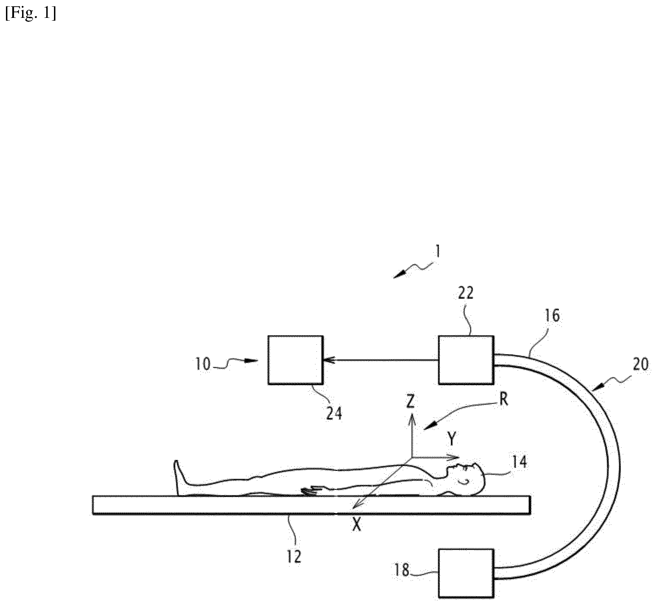

La figure 1 illustre schématiquement une salle d'opération 1, équipée d'un système 10 de recalage d'images, permettant de fournir une aide pour l'intervention.

Par exemple, l'intervention est une intervention endovasculaire.

La salle d'opération 1 est équipée d'une table d'opération 12, sur laquelle est représenté un patient 14.

Le système 10 comporte un dispositif 20 de radiographie, qui est un dispositif d'acquisition d'images mobile en translation et en rotation autour de la table d'opération 12.

Le dispositif 20, connu sous le nom de « C-ARM mobile », comporte un arceau de scopie 16, une source 18 de rayon X et une unité 22 de réception et de détection de rayons X, positionnée en regard de la source 18.

Ce dispositif d'acquisition d'images est apte à capter des images des structures anatomiques positionnées entre la source 18 de rayons X et l'unité 22 de réception et de détection.

L'arceau de scopie 16 est adapté à être tourné selon un premier angle de rotation dit angle crânial et un deuxième angle de rotation dit angle latéral par rapport au plan de la table 12. De plus, le C-arm mobile est adapté à être déplacé en translation autour de la table 12. Un facteur de zoom est associé à la prise de vues par le dispositif d'acquisition d'images.

Ainsi, le dispositif d'acquisition d'images 20 est apte à capter des images bidimensionnelles (2D) radiographiques de diverses portions du corps du patient. Les images 2D fluoroscopiques ou angiographiques acquises comportent des structures anatomiques du patient : structures osseuses ou structures vasculaires.

Le système 10 comporte également un dispositif électronique programmable 24, comportant un ou plusieurs processeurs, configuré pour mettre en œuvre un procédé de recalage d'images tel que décrit par la suite.

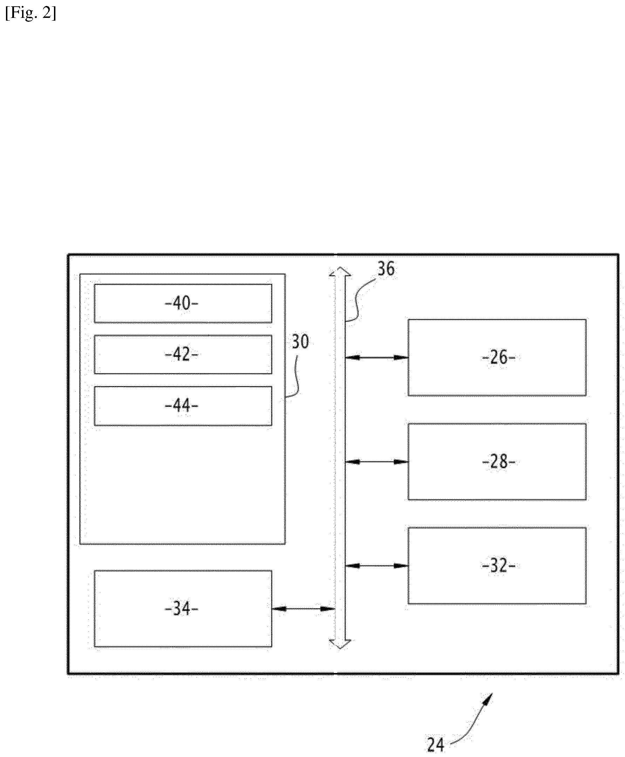

La figure 2 illustre les principaux blocs d'un dispositif électronique programmable 24 configuré pour mettre en œuvre le procédé de recalage tel que décrit en détail ci-après.

Le dispositif électronique programmable 24, par exemple un ordinateur, comprend une unité de visualisation 26, composée d'un ou plusieurs écrans, une unité 28 de saisie des commandes d'un opérateur, par exemple un clavier, une souris, un pavé tactile ou une interface sans contact, par exemple à reconnaissance de commandes vocales. Dans un mode de réalisation, l'unité 28 est intégrée dans un écran tactile 26.

Le dispositif électronique programmable 24 comprend en outre une unité centrale de traitement 30, comprenant un ou plusieurs processeurs de calcul, apte à exécuter des instructions de programme informatique lorsque le dispositif 24 est mis sous tension. Le dispositif 24 comporte optionnellement un contrôleur 32, permettant d'envoyer des commandes et de sélectionner des éléments à distance, par exemple par commande vocale.

Le dispositif 24 comporte également une mémoire électronique 34, adaptée à stocker des données et des instructions de code exécutable permettant la mise en œuvre de programmes comportant des instructions de code aptes à mettre en œuvre le procédé selon l'invention. Les divers blocs fonctionnels du dispositif 24 décrits ci-dessus sont connectés via un bus de communication 36.

La mémoire électronique 34 est adaptée à mémoriser une première image tridimensionnelle des structures anatomiques du patient 14, acquise selon un premier mode d'acquisition, par exemple par scanner, IRM, échographie 3D ou imagerie volumétrique par faisceau conique OU CBCT (« Cone Beam Computed Tomography »).

Le dispositif électronique programmable 24 est adapté à recevoir des deuxièmes images bidimensionnelles du patient 14, acquises selon un deuxième mode d'acquisition, par exemple par fluoroscopie ou angiographie, par un dispositif d'acquisition d'images 20.

Une transformation spatiale rigide définie par 6 paramètres (ou degrés de liberté) et permettant de mettre en correspondance chaque deuxième image bidimensionnelle avec la première image tridimensionnelle, dans un référentiel commun, est déterminée par un procédé de recalage.

Le référentiel commun est de préférence un référentiel 3D associé au patient, par exemple le référentiel noté R à la figure 1.

L'unité centrale de traitement 30 est configurée pour mettre en œuvre :
- un module 40 de détection de structures anatomiques dans la deuxième image bidimensionnelle, par application d'un premier réseau de neurones de détection,
- un module 42 d'estimation à partir des structures anatomiques détectées, par application d'au moins un de neurones de classification entraîné sur une base de données générique des paramètres de translation et de rotation de la transformation spatiale rigide, et
- un module 44 de recalage iconique 2D/3D initialisé en utilisant la transformation spatiale rigide.

Le module 42 comporte, dans un mode de réalisation :
- un module de première estimation à partir des structures anatomiques détectées, par application d'au moins un réseau de neurones de classification entraîné sur une base de données générique, d'un premier angle de rotation et d'un deuxième angle de rotation, qui sont représentatifs de la rotation de l'arceau de scopie, et forment deux paramètres de rotation de la transformation spatiale rigide,
- un module de deuxième estimation des autres paramètres de la transformation spatiale rigide, utilisant les premier et deuxième angles de rotation obtenus par le module de première estimation.

Les six paramètres déterminés, définissant la transformation spatiale rigide de recalage et correspondant aux six degrés de liberté de déplacement du dispositif d'acquisition d'images par rapport au patient, sont mémorisés.

Dans un mode de réalisation, les modules 40, 42, 44 sont réalisés sous forme d'instructions logicielles formant un programme d'ordinateur, qui, lorsqu'il est exécuté par un dispositif programmable, met en œuvre un procédé de recalage d'images selon tous les modes de réalisation de l'invention.

En variante non représentée, les modules 40, 42, 44sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit*)*.*

Le programme d'ordinateur comportant des instructions logicielles est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

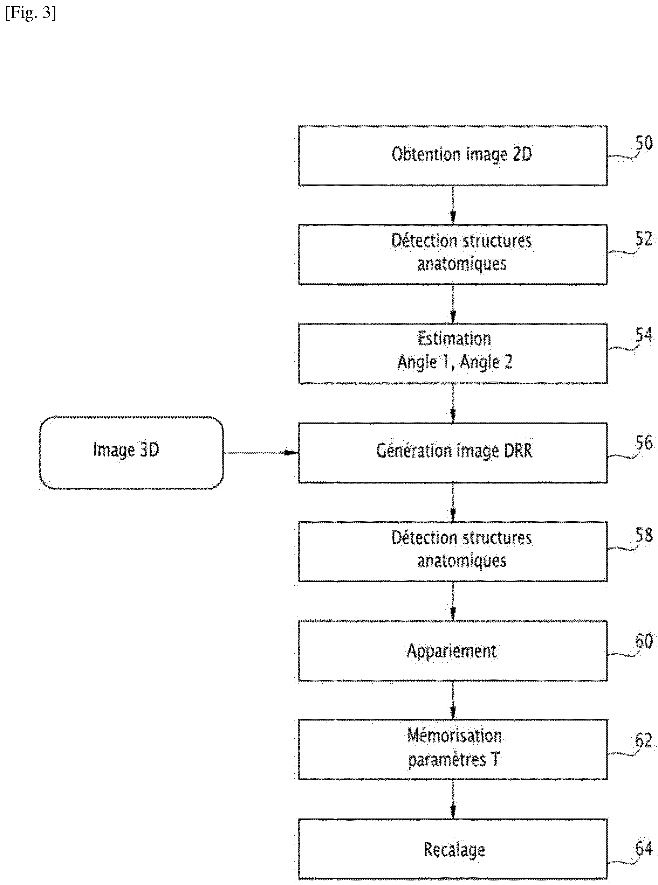

La figure 3 représente les principales étapes mises en œuvre dans un procédé de recalage selon un mode de réalisation, mises en œuvre par un processeur 30 d'un dispositif programmable 24.

Le procédé de recalage a pour objectif un recalage dans un référentiel commun, par exemple un référentiel associé au patient, d'une première image tridimensionnelle de première modalité, acquise en phase pré-opératoire et mémorisée, et d'une deuxième image bidimensionnelle, de deuxième modalité, acquise par un dispositif d'acquisition mobile, ultérieurement à l'acquisition de la première image, par exemple en phase peropératoire.

Le recalage dans un référentiel commun est effectué par l'application d'une transformation spatiale rigide à 6 paramètres (ou 6 degrés de liberté).

L'acquisition et la construction de la première image tridimensionnelle sont effectuées par exemple par une technologie de tomographie (CT), d'IRM, d'échographie 3D ou de CBCT (« Cone Beam Computed Tomography »).

Le procédé comporte une étape 50 d'obtention d'une deuxième image bidimensionnelle, par exemple acquise par radiographie, par exemple par fluoroscopie ou par angiographie, par un dispositif d'acquisition d'images 20 tel que décrit en référence à la figure 1.

Une étape 52 de détection automatique de structures anatomiques de l'image bidimensionnelle acquise est appliquée, cette détection mettant en œuvre un premier réseau de neurones de détection.

Par exemple, les structures anatomiques sont des structures osseuses du patient, incluant les vertèbres, hanche(s) etc.

Selon une variante ou en complément, les structures anatomiques détectées sont des structures vasculaires incluant l'aorte, les artères rénales, les iliaques, etc..

Les structures anatomiques détectées sont rangées dans des catégories de structures anatomiques, i.e. vertèbres, hanches, sacrum etc.

Le premier réseau de neurones de détection appliqué est par exemple un réseau de neurones convolutif de type RCNN. Un réseau RCNN commence par extraire des régions intéressantes de l'image grâce à une recherche sélective. Cette recherche sélective utilise la structure de l'image et des techniques de partitionnement pour récupérer les régions pertinentes, i.e. les régions qui comprennent des structures anatomiques des catégories de structures anatomiques recherchées. Ensuite, ces régions pertinentes sont utilisées comme données d'entrée pour un réseau CNN de classification classique, par exemple avec une architecture de type AlexNet.

Les paramètres définissant le réseau de neurones de détection sont obtenus dans une phase préalable d'apprentissage, effectué sur une base de données générique d'images d'apprentissage, comprenant des images bidimensionnelles de même modalité que la deuxième image bidimensionnelle acquise à l'étape 50, par exemple obtenues sur une pluralité de patients. En complément, la base de données d'images d'apprentissage comprend des images synthétiques, également appelées images DRR pour Digitally Reconstructed Radiographs, générées à partir d'images 3D par projection.

Avantageusement, la base de données d'images d'apprentissage est générique, elle n'est pas spécifique au patient. Elle est calculée et mémorisée préalablement à l'étape de détection de structures anatomiques 52.

A l'issue de l'étape de détection 52, des structures anatomiques sont détectées et extraites de la deuxième image bidimensionnelle, par exemple sous forme de régions d'intérêt (ROI), qui sont des portions d'images englobant des structures détectées. Pour chaque catégorie de structures anatomiques détectées, ces régions d'intérêt sont fournies en entrée d'une étape 54 de première estimation, qui effectue l'estimation d'un premier paramètre de rotation et d'un deuxième paramètre de rotation de la transformation spatiale rigide recherchée.

Lorsque le dispositif d'acquisition d'image est un dispositif tel que décrit en référence à la figure 1, le premier paramètre de rotation est un premier angle de rotation, Angle 1, par exemple l'angle de rotation crânial de l'arceau de scopie (rotation autour de l'axe X dans le référentiel R de la figure 1) et le deuxième paramètre de rotation est un deuxième angle de rotation, Angle 2, par exemple l'angle latéral de rotation de l'arceau de scopie (rotation autour de l'axe Y dans le référentiel 3D noté R à la figure 1). Ces premier et deuxième angle de rotation caractérisent la rotation de l'arceau de scopie 16 par rapport au plan de la table sur laquelle le patient est allongé (plan du patient).

L'estimation 54 de ces angles de rotation est effectuée par mise en œuvre d'au moins un deuxième réseau de neurones, de type réseau de neurones de classification, sur les structures anatomiques obtenues à l'étape de détection 52.

De préférence, un deuxième réseau de neurones de classification est appliqué pour chaque catégorie de structures anatomiques. Chaque deuxième réseau de neurones a une même architecture mais est défini par des paramètres obtenus par entraînement sur des régions d'intérêt (ROI) englobant des structures anatomiques de même catégorie.

Par exemple, chaque deuxième réseau de neurones de classification a une structure de réseau de neurones convolutif de type AlexNet Les paramètres définissant le réseau de neurones de classification sont obtenus dans une phase préalable d'apprentissage, pour chaque classe de structures anatomiques distinctes. L'apprentissage est effectué sur une base de données générique , comprenant des structures anatomiques, par exemple des structures osseuses, extraites d'image bidimensionnelles pour lesquelles les premier et deuxième angle de rotation du dispositif d'acquisition d'images sont connus. De plus, des images synthétiques générées à partir d'images 3D avec des angles de rotation connus sont également utilisables pour l'apprentissage.

Ainsi, par exemple pour la catégorie « Vertèbres », un réseau de neurones de classification des premier et deuxième paramètres de rotation entraîné sur une base de données de structures osseuses de type « vertèbre » est utilisé, pour la catégorie « Hanches », un réseau de neurones de classification des premier et deuxième paramètres de rotation entraîné sur une base de données de structures osseuses de type « hanche » est utilisé etc.

Avantageusement, pour chaque catégorie de structures anatomiques, la base de données d'images d'apprentissage est générique, elle n'est pas spécifique au patient. Elle est calculée et mémorisée préalablement.

Des valeurs du premier angle de rotation Angle 1, et du deuxième angle de rotation Angle 2 sont obtenues et mémorisées à l'issue de l'étape 54 d'estimation.

Selon une variante, une seule catégorie de structures anatomiques, est utilisée pour l'estimation du premier angle de rotation et du deuxième angle de rotation.

Selon une autre variante, un seul deuxième réseau de neurones de classification, préalablement entraîné pour une pluralité de catégories de structures anatomiques, sur une base de données générique, est utilisé pour l'estimation du premier angle de rotation et du deuxième angle de rotation.

Le procédé comporte ensuite une deuxième estimation des quatre autres paramètres qui définissent la transformation spatiale rigide, qui sont respectivement deux paramètres de translation dans le plan, un paramètre de rotation dans le plan et un facteur de zoom, le plan désignant ici le plan de la table 12. La deuxième estimation est réalisée par les étapes 56 à 60 décrites ci-après.

Le procédé comporte ensuite une génération 56 d'une troisième image bidimensionnelle, obtenue par projection à partir de la première image 3D préalablement mémorisée, en fonction des premier et deuxième angles de rotation estimés.

Une deuxième détection 58 des structures anatomiques, par exemple des structures osseuses présente dans la troisième image bidimensionnelle est mise en œuvre. Le premier réseau de neurones de détection, utilisé à la première étape de détection 52, est de préférence également mis en œuvre dans la deuxième détection 58, et les structures anatomiques détectées sont rangées dans les catégories de structures anatomiques.

Les structures anatomiques présentes dans la troisième image bidimensionnelle sont détectées et localisées dans cette image à l'issue de la deuxième détection 58.

Le procédé comporte ensuite une étape 60 d'appariement des structures anatomiques détectées respectivement dans la deuxième image bidimensionnelle et dans la troisième image bidimensionnelle, selon leur catégorie. La position relative des structures anatomiques appariées et leur taille permettent de calculer deux paramètres de translation dans le plan de ces images, un angle de rotation dans le plan et un facteur de zoom.

Pour le calcul de ces paramètres, dans un mode de réalisation, le centre de chaque structure détectée est utilisé pour effectuer un appariement structure à structure, et un recalage suivant une approche de type géométrique peut être utilisé pour estimer la transformation rigide à 4 paramètres entre les deux images.

Ainsi, à l'issue de l'étape 60, l'ensemble des 6 paramètres recherchés, définissant la transformation spatiale rigide de recalage, comprenant les premier et deuxième paramètres de rotation (Angle 1 et Angle 2) obtenus à l'étape de première estimation 54, un troisième paramètre de rotation obtenu à l'étape 60, ainsi que les paramètres de translation et le facteur de zoom obtenus à l'étape 60.

Ces paramètres de transformation spatiale rigide sont mémorisés à l'étape de mémorisation des paramètres 62, et appliqués dans une étape 64 de recalage 3D/2D entre la première image 3D et la deuxième image 2D.

L'étape de recalage 64 met en œuvre une initialisation par application de la transformation spatiale rigide définie par les paramètres mémorisés, et, une optimisation locale du recalage. Toute méthode de recalage connue est applicable, mais le recalage sera de préférence un recalage iconique.

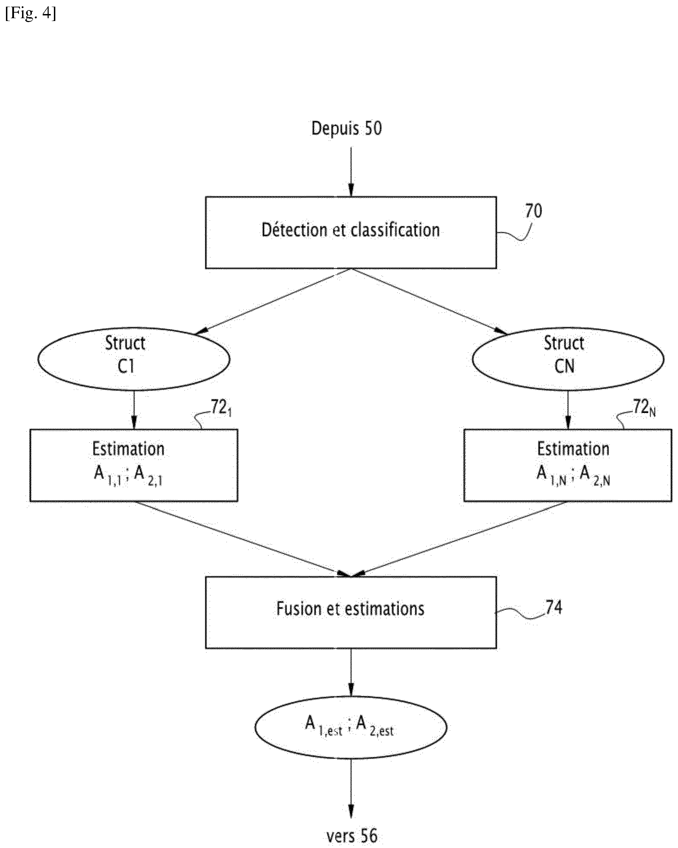

La figure 4 représente en détail les principales étapes de la détection des structures anatomiques et de l'estimation des premier et deuxième paramètres de rotation selon un mode de réalisation.

L'étape 50 d'obtention d'une deuxième image bidimensionnelle est suivie d'une étape 70 de détection et de classification permettant des régions d'intérêt contenant de structures anatomiques, classées un nombre N prédéterminé de catégories.

Par exemple, lorsque les structures anatomiques sont des structures osseuses, un nombre N=5 de catégories est utilisé, comprenant les vertèbres, les hanches, le sacrum, les têtes fémorales et les fémurs.

La détection et classification est effectuée en utilisant un même réseau de neurones de classification, par exemple un réseau de neurones RCNN, préalablement entraîné sur une base de données générique, non spécifique à un même patient, pour détecter des structures de N catégories prédéterminées.

Pour chaque catégorie Cᵢ de structures anatomiques détectée dans la deuxième image bidimensionnelle, des étapes d'estimation 72₁ à 72_{N} du premier angle de rotation A_{1,i} et du deuxième angle de rotation A_{2,i} sont appliquées.

Une étape 74 de fusion des estimations met en œuvre fusion des premiers angles de rotation par classe pour calculer premier paramètre de rotation estimé (A_{1,est}) et une fusion des deuxièmes angles de rotation par classe pour obtenir le deuxième paramètre de rotation estimé (A_{2,est}).

Par exemple, la fusion est un calcul d'une valeur moyenne ou d'une valeur médiane des valeurs estimées.

Selon une variante, le procédé de recalage d'images comporte une étape de détection des structures anatomiques dans la deuxième image bidimensionnelle par application d'un premier réseau de neurones de détection pour obtenir des régions d'intérêt contenant de structures anatomiques classées selon plusieurs catégories de structures, suivie d'une étape d'estimation des 6 paramètres définissant la transformation spatiale rigide par application, pour chaque catégorie de structures anatomiques, d'un deuxième réseau de neurones de classification entraîné pour ladite catégorie de structures anatomiques. Ainsi, un ensemble de 6 paramètres estimés par catégorie de structures anatomiques est obtenu. Ces ensembles sont alors fusionnés, paramètre par paramètre, pour obtenir une estimation des 6 paramètres de la transformation spatiale rigide. Par exemple, la fusion consiste à calculer la valeur moyenne ou la valeur médiane pour chaque paramètre estimé.

Chaque réseau de neurones utilisé est entraîné dans une phase préalable, sur une base de données génériques, indépendante du patient.

Avantageusement, le procédé de recalage proposé permet d'estimer automatiquement des paramètres d'une transformation spatiale rigide pour recaler la première image de première modalité et la deuxième image de deuxième modalité dans un même référentiel, avec un premier réseau de neurones et au moins un deuxième réseau de neurones, sans nécessiter d'entraînement spécifique des réseaux de neurones sur des données du patient.

Avantageusement, les paramètres des réseaux de neurones de détection et/ou de classification utilisés sont calculés lors d'une phase d'apprentissage préalable, effectuée en « offline », et ne sont pas spécifiques au patient mais utilisables pour tous les patients. Les réseaux de neurones ainsi calculés sont appliqués en phase per-opératoire sans avoir à être mis à jour ou adaptés au patient.

Avantageusement, le temps de calcul et les nombre de données à mémoriser pour caractériser les réseaux de neurones utilisés sont restreints.

## Revendications

1. Procédé de recalage entre une première image tridimensionnelle acquise selon un premier mode d'acquisition, et comprenant des structures anatomiques d'un patient et une deuxième image bidimensionnelle, acquise selon un deuxième mode d'acquisition par un dispositif d'acquisition d'images monté sur un arceau de scopie mobile en rotation et en translation, la deuxième image comprenant une partie des structures anatomiques dudit patient, le recalage mettant en œuvre une transformation spatiale rigide définie par des paramètres de rotation et de translation,
le procédé étant mis en œuvre par un processeur d'un dispositif électronique programmable et étant **caractérisé en ce qu'**il comporte des étapes de :
- détection automatique des structures anatomiques dans l'image bidimensionnelle par application d'un premier réseau de neurones de détection ; entraîné sur une base de données générique,
- estimation, à partir des structures anatomiques détectées automatiquement dans ladite deuxième image bidimensionnelle, par application d'au moins un réseau de neurones de classification préalablement entraîné sur une base de données générique, des paramètres de rotation et de translation de ladite transformation spatiale rigide, ladite estimation comportant :
-- une première estimation, à partir desdites structures anatomiques détectées automatiquement dans ladite deuxième image bidimensionnelle, par application dudit au moins un réseau de neurones de classification, d'un premier angle de rotation et d'un deuxième angle de rotation de ladite transformation spatiale rigide, caractérisant la position de l'arceau de scopie,
-- une deuxième estimation de paramètres de translation, d'un troisième angle de rotation et d'un facteur de zoom de ladite transformation spatiale rigide, la deuxième estimation utilisant le résultat de la première estimation,
- recalage iconique 3D/2D entre la première image tridimensionnelle et la deuxième image bidimensionnelle en partant d'une initialisation avec ladite transformation spatiale rigide.

2. Procédé selon la revendication 1, dans lequel les structures anatomiques sont classées en une pluralité de catégories de structures anatomiques prédéterminées, et dans lequel l'estimation des paramètres de la transformation rigide comporte la mise en œuvre d'un deuxième réseau de neurones de classification par catégorie de structures anatomiques pour obtenir des paramètres de transformation estimés par catégorie de structures anatomiques.

3. Procédé selon la revendication 1 dans lequel un réseau de neurones de classification est appliqué par catégorie de structures anatomiques pour obtenir un premier angle de rotation et un deuxième angle de rotation estimés par catégorie de structures anatomiques, le procédé comportant en outre une fusion des premiers angles de rotation estimés par catégorie de structures anatomiques pour obtenir ledit premier angle de rotation estimé et une fusion des deuxièmes angles de rotation estimés par catégorie de structures anatomiques pour obtenir ledit deuxième paramètre estimé.

4. Procédé selon la revendication 3, dans lequel chaque fusion consiste en un calcul de valeur moyenne ou en un calcul de valeur médiane.

5. Procédé selon l'une des revendications 1 à 4, dans lequel la deuxième estimation comprend :
- une génération d'une troisième image bidimensionnelle obtenue à partir de la première image tridimensionnelle en appliquant lesdits premier et deuxième angles de rotation,
- une détection automatique de structures anatomiques sur ladite troisième image, et
- un appariement entre les structures des dites deuxième et troisième images bidimensionnelles pour obtenir lesdits paramètres de translation, le troisième angle de rotation et le facteur de zoom de ladite transformation spatiale rigide.

6. Procédé selon la revendication 5, dans lequel la détection de structures anatomiques dans ladite troisième image bidimensionnelle est effectuée par application dudit premier réseau de neurones de détection.

7. Procédé selon les revendications 1 à 6, dans lequel lesdites structures anatomiques sont des structures osseuses obtenues sur une deuxième image bidimensionnelle acquise par fluoroscopie.

8. Procédé selon les revendications 1 à 6, dans lequel lesdites structures anatomiques sont des structures vasculaires obtenues sur une deuxième image bidimensionnelle acquise par angiographie.

9. Procédé selon l'une des revendications 1 à 8, dans lequel la première image tridimensionnelle est acquise selon un premier mode d'acquisition parmi la tomographie, IRM, échographie 3D ou imagerie volumétrique par faisceau conique.

10. Programme d'ordinateur comportant des instructions logicielles qui, lorsqu'elles sont implémentées par un dispositif électronique programmable, mettent en œuvre un procédé de recalage entre une première image tridimensionnelle acquise selon un premier mode d'acquisition, et comprenant des structures anatomiques d'un patient et une deuxième image bidimensionnelle, acquise selon un deuxième mode d'acquisition conforme aux revendications 1 à 9.

11. Dispositif de recalage entre une première image tridimensionnelle acquise selon un premier mode d'acquisition, et comprenant des structures anatomiques d'un patient et une deuxième image bidimensionnelle, acquise selon un deuxième mode d'acquisition par un dispositif d'acquisition d'images monté sur un arceau de scopie mobile en rotation et en translation, la deuxième image comprenant une partie des structures anatomiques dudit patient, le recalage mettant en œuvre une transformation spatiale rigide définie par des paramètres de rotation et de translation, le dispositif comportant un processeur **caractérisé en ce qu'**il est configuré pour mettre en œuvre :
- un module détection automatique des structures anatomiques dans l'image bidimensionnelle par application d'un premier réseau de neurones de détection ; entraîné sur une base de données générique,
- un module estimation, à partir des structures anatomiques détectées automatiquement dans ladite deuxième image bidimensionnelle, par application d'au moins un réseau de neurones de classification préalablement entraîné sur une base de données générique, des paramètres de rotation et de translation de ladite transformation spatiale rigide, ledit module d'estimation comportant :
-- un module de première estimation, à partir desdites structures anatomiques détectées automatiquement dans ladite deuxième image bidimensionnelle, par application dudit au moins un réseau de neurones préalablement entraîné sur une base de données générique, d'un premier angle de rotation et d'un deuxième angle de rotation de ladite transformation spatiale rigide, caractérisant la position de l'arceau de scopie,
-- un module de deuxième estimation de paramètres de translation, d'un troisième angle de rotation et d'un facteur de zoom de ladite transformation spatiale rigide, la deuxième estimation utilisant le résultat de la première estimation,
- un module de recalage iconique 3D/2D entre la première image tridimensionnelle et la deuxième image bidimensionnelle en partant d'une initialisation avec ladite transformation spatiale rigide.

12. Système de recalage entre une première image tridimensionnelle acquise selon un premier mode d'acquisition, et comprenant des structures anatomiques d'un patient et une deuxième image bidimensionnelle, acquise selon un deuxième mode d'acquisition, le système comportant un dispositif d'acquisition d'images monté sur un arceau de scopie mobile en rotation et en translation, la deuxième image comprenant une partie des structures anatomiques dudit patient, le recalage mettant en œuvre une transformation spatiale rigide définie par des paramètres de rotation et de translation, et un dispositif de recalage d'images selon la revendication 11.

## Patentansprüche

1. Verfahren zum Neupositionieren zwischen einem ersten dreidimensionalen Bild, das gemäß einem ersten Erfassungsmodus erfasst wird und anatomische Strukturen eines Patienten umfasst, und einem zweiten zweidimensionalen Bild, das gemäß einem zweiten Erfassungsmodus von einer Bilderfassungsvorrichtung, die an einem C-Bogen montiert ist, der rotations- und translationsbeweglich ist, erfasst wird, wobei das zweite Bild einen Teil der anatomischen Strukturen des Patienten umfasst, wobei das Neupositionieren eine feste räumliche Transformation, die durch Rotations- und Translationsparameter definiert ist, umsetzt,
wobei das Verfahren durch einen Prozessor einer programmierbaren elektronischen Vorrichtung umgesetzt wird und **dadurch gekennzeichnet ist, dass** es folgende Schritte umfasst:
- automatisches Detektieren der anatomischen Strukturen in dem zweidimensionalen Bild durch Anwenden eines ersten neuronalen Detektionsnetzes; das mit einer generischen Datenbank trainiert wird,
- Schätzen, ausgehend von den anatomischen Strukturen, die in dem zweiten zweidimensionalen Bild automatisch detektiert werden, der Rotations- und Translationsparameter der festen räumlichen Transformation durch Anwenden mindestens eines neuronalen Klassifizierungsnetzes, das zuvor mit einer generischen Datenbank trainiert wurde, wobei das Schätzen umfasst:
-- erstes Schätzen, ausgehend von den anatomischen Strukturen, die in dem zweiten zweidimensionalen Bild automatisch detektiert werden, durch Anwenden des mindestens einen neuronalen Klassifizierungsnetzes, eines ersten Rotationswinkels und eines zweiten Rotationswinkels der festen räumlichen Transformation, welche die Position des C-Bogens kennzeichnen,
-- zweites Schätzen von Translationsparametern, eines dritten Rotationswinkels und eines Zoom-Faktors der festen räumlichen Transformation, wobei das zweite Schätzen das Ergebnis des ersten Schätzens verwendet,
- ikonisches 3D/2D-Neupositionieren zwischen dem ersten dreidimensionalen Bild und dem zweiten zweidimensionalen Bild ausgehend von einer Initialisierung mit der festen räumlichen Transformation.

2. Verfahren nach Anspruch 1, wobei die anatomischen Strukturen in eine Vielzahl von vorherbestimmten anatomischen Strukturkategorien klassifiziert sind, und wobei das Schätzen der Parameter der festen Transformation das Umsetzen eines zweiten neuronalen Klassifizierungsnetzes nach anatomischen Strukturkategorien umfasst, um Transformationsparameter zu erzielen, die nach Kategorie anatomischer Strukturen geschätzt werden.

3. Verfahren nach Anspruch 1, wobei ein neuronales Klassifizierungsnetz nach Kategorie anatomischer Strukturen angewendet wird, um einen ersten Rotationswinkel und einen zweiten Rotationswinkel zu erzielen, die nach Kategorie anatomischer Strukturen geschätzt werden, wobei das Verfahren ferner das Fusionieren der ersten Rotationswinkel, die nach Kategorie anatomischer Strukturen geschätzt werden, um den ersten geschätzten Rotationswinkel zu erzielen, und das Fusionieren der zweiten Rotationswinkel umfasst, die nach Kategorie anatomischer Strukturen geschätzt werden, um den zweiten geschätzten Parameter zu erzielen.

4. Verfahren nach Anspruch 3, wobei jedes Fusionieren aus einer Mittelwertberechnung oder aus einer Medianwertberechnung besteht.

5. Verfahren nach einem der Ansprüche 1 bis 4, wobei das zweite Schätzen umfasst:
- Generieren eines dritten zweidimensionalen Bildes, ausgehend von dem ersten dreidimensionalen Bild durch Anwenden der ersten und zweiten Rotationswinkel erzielt wird,
- automatisches Detektieren von anatomischen Strukturen in dem dritten Bild, und
- Paaren zwischen den Strukturen des zweiten und des dritten zweidimensionalen Bildes, um die Translationsparameter, den dritten Rotationswinkel und den Zoom-Faktor der festen räumlichen Transformation zu erzielen.

6. Verfahren nach Anspruch 5, wobei das Detektieren von anatomischen Strukturen in dem dritten zweidimensionalen Bild durch Anwenden des ersten neuronalen Detektionsnetzes vorgenommen wird.

7. Verfahren nach Anspruch 1 bis 6, wobei die anatomischen Strukturen Knochenstrukturen sind, die in einem zweiten zweidimensionalen Bild erzielt werden, das durch Fluoroskopie erfasst wird.

8. Verfahren nach Anspruch 1 bis 6, wobei die anatomischen Strukturen vaskuläre Strukturen sind, die in einem zweiten zweidimensionalen Bild erzielt werden, das durch Angiographie erfasst wird.

9. Verfahren nach einem der Ansprüche 1 bis 8, wobei das erste dreidimensionale Bild gemäß einem ersten Erfassungsmodus aus Tomographie, IRM, 3D-Echographie oder volumetrischer Konusstrahl-Bildgebung erfasst wird.

10. Computerprogramm, umfassend Software-Anweisungen, die, wenn sie von einer programmierbaren elektronischen Vorrichtung implementiert werden, ein Verfahren zum Neupositionieren zwischen einem ersten dreidimensionalen Bild, das gemäß einem ersten Erfassungsmodus erfasst wird und anatomische Strukturen eines Patienten umfasst, und einem zweiten zweidimensionalen Bild umzusetzen, das gemäß einem zweiten Erfassungsmodus nach Anspruch 1 bis 9 erfasst wird.

11. Vorrichtung zum Neupositionieren zwischen einem ersten dreidimensionalen Bild, das gemäß einem ersten Erfassungsmodus erfasst wird und anatomische Strukturen eines Patienten umfasst, und einem zweiten zweidimensionalen Bild, das gemäß einem zweiten Erfassungsmodus von einer Bilderfassungsvorrichtung erfasst wird, die an einem C-Bogen montiert ist, der rotations- und translationsbeweglich ist, wobei das zweite Bild einen Teil der anatomischen Strukturen des Patienten umfasst, wobei das Neupositionieren eine feste räumliche Transformation umsetzt, die durch Rotations- und Translationsparameter definiert ist, wobei die Vorrichtung einen Prozessor umfasst, der **dadurch gekennzeichnet ist, dass** er konfiguriert ist zum Umsetzen von:
- einem Modul zum automatischen Detektieren der anatomischen Strukturen in dem zweidimensionalen Bild durch Anwenden eines ersten neuronalen Detektionsnetzes; das mit einer generischen Datenbank trainiert wird,
- einem Modul zum Schätzen, ausgehend von den automatisch detektierten anatomischen Strukturen in dem zweiten zweidimensionalen Bild, durch Anwenden mindestens eines neuronalen Klassifizierungsnetzes, das zuvor mit einer generischen Datenbank trainiert wurde, der Rotations- und Translationsparameter der festen räumlichen Transformation, wobei das Schätzen umfasst:
-- ein Modul für ein erstes Schätzen ausgehend von den anatomischen Strukturen, die in dem zweiten zweidimensionalen Bild automatisch detektiert werden, durch Anwenden des mindestens einen neuronalen Klassifizierungsnetzes, das zuvor mit einer generischen Datenbank trainiert wurde, eines ersten Rotationswinkels und eines zweiten Rotationswinkels der festen räumlichen Transformation, welche die Position des C-Bogens kennzeichnen,
-- ein Modul für ein zweites Schätzen von Translationsparametern, eines dritten Rotationswinkels und eines Zoom-Faktors der festen räumlichen Transformation, wobei das zweite Schätzen das Ergebnis des ersten Schätzens verwendet,
- ein Modul zum ikonischen 3D/2D-Neupositionieren zwischen dem ersten dreidimensionalen Bild und dem zweiten zweidimensionalen Bild ausgehend von einer Initialisierung mit der festen räumlichen Transformation.

12. System zum Neupositionieren zwischen einem ersten dreidimensionalen Bild, das gemäß einem ersten Erfassungsmodus erfasst wird und anatomische Strukturen eines Patienten umfasst, und einem zweiten zweidimensionalen Bild, das gemäß einem zweiten Erfassungsmodus erfasst wird, wobei das System eine Bilderfassungsvorrichtung, die an einem C-Bogen montiert ist, der rotations- und translationsbeweglich ist, wobei das zweite Bild einen Teil der anatomischen Strukturen des Patienten umfasst, wobei das Neupositionieren eine feste räumliche Transformation umfasst, die durch Rotations- und Translationsparameter definiert ist, und eine Vorrichtung nach Anspruch 11.

## Claims

1. A method for registration between a first three-dimensional image acquired according to a first acquisition mode, and comprising anatomical structures of a patient, and a second two-dimensional image, acquired according to a second acquisition mode by an image acquisition device mounted on a scoping arch movable in rotation and in translation, the second image comprising a portion of the anatomical structures of said patient, the registration implementing a rigid spatial transformation defined by rotation and translation parameters,
the method being implemented by a processor of a programmable electronic device and being **characterized in that** it includes steps of:
- automatic detection of the anatomical structures in the two-dimensional image by application of a first detection neural network trained on a generic database,
- estimation, from the anatomical structures automatically detected in said second two-dimensional image, by application of at least one classification neural network trained beforehand on a generic database, of the rotation and translation parameters of said rigid spatial transformation, said estimation including:
-- a first estimation, from said anatomical structures automatically detected in said second two-dimensional image, by application of at least one classification neural network, of a first angle of rotation and of a second angle of rotation of said rigid spatial transformation, characterizing the position of the scoping arch,
-- a second estimation of translational parameters, of a third angle of rotation and of a zoom factor of said rigid spatial transformation, the second estimation using the result of the first estimation,
- 3D/2D iconic registration between the first three-dimensional image and the second two-dimensional image starting from an initialization with said rigid spatial transformation.

2. The method according to claim 1, wherein the anatomical structures are classified into a plurality of predetermined anatomical structure categories, and wherein the estimation of the parameters of the rigid transformation includes the implementation of a second classification neural network per anatomical structure category to obtain transformation parameters estimated per anatomical structure category.

3. The method according to claim 1, wherein a classification neural network is applied per anatomical structure category to obtain a first angle of rotation and a second angle of rotation estimated per anatomical structure category, the method further including a stitching of the first angles of rotation estimated per anatomical structure category to obtain said estimated first angle of rotation, and a stitching of the second angles of rotation estimated per anatomical structure category to obtain said estimated second parameter.

4. The method according to claim 3, wherein each stitch consists of an average value calculation or of a median value calculation.

5. The method according to one of claims 1 to 4, wherein the second estimation comprises:
- a generation of a third two-dimensional image obtained from the first three-dimensional image by applying said first and second angles of rotation,
- an automatic detection of anatomical structures on said third image, and
- a pairing between the structures of said second and third two-dimensional images to obtain said translation parameters, the third angle of rotation and the zoom factor of said rigid spatial transformation.

6. The method according to claim 5, wherein the detection of anatomical structures in said third two-dimensional image is performed by application of said first detection neural network.

7. The method according to claims 1 to 6, wherein said anatomical structures are bone structures obtained on a second two-dimensional image acquired by fluoroscopy.

8. The method according to claims 1 to 6, wherein said anatomical structures are vascular structures obtained on a second two-dimensional image acquired by angiography.

9. The method according to one of claims 1 to 8, wherein the first three-dimensional image is acquired according to a first acquisition mode among tomography, MRI, 3D sonography or cone beam computed tomography.

10. A computer program including software instructions which, when they are implemented by a programmable electronic device, implement a method for registration between a first three-dimensional image acquired according to a first acquisition mode, and comprising anatomical structures of a patient and a second two-dimensional image, acquired according to a second acquisition mode in accordance with claims 1 to 9.

11. A device for registration between a first three-dimensional image acquired according to a first acquisition mode, and comprising anatomical structures of a patient, and a second two-dimensional image, acquired according to a second acquisition mode by an image acquisition device mounted on a scoping arch movable in rotation and in translation, the second image comprising a portion of the anatomical structures of said patient, the registration implementing a rigid spatial transformation defined by rotation and translation parameters,
the device including a processor **characterized in that** it is configured to implement:
- a module for automatic detection of the anatomical structures in the two-dimensional image by application of a first detection neural network; trained on a generic database,
- a module for estimating, from the anatomical structures automatically detected in said second two-dimensional image, by application of at least one classification neural network trained beforehand on a generic database, of the rotation and translation parameters of said rigid spatial transformation, said module for estimating including:
-- a module for a first estimation, from said anatomical structures automatically detected in said second two-dimensional image, by application of at least one classification neural network, of a first angle of rotation and of a second angle of rotation of said rigid spatial transformation, characterizing the position of the scoping arch,
-- a module for a second estimation of translational parameters, of a third angle of rotation and of a zoom factor of said rigid spatial transformation, the second estimation using the result of the first estimation,
- a module for 3D/2D iconic registration between the first three-dimensional image and the second two-dimensional image starting from an initialization with said rigid spatial transformation.

12. A system for registration between a first three-dimensional image acquired according to a first acquisition mode, and comprising anatomical structures of a patient, and a second two-dimensional image, acquired according to a second acquisition mode, the system including an image acquisition device mounted on a scoping arch movable in rotation and in translation, the second image comprising a portion of the anatomical structures of said patient, the registration implementing a rigid spatial transformation defined by rotation and translation parameters, and a device for registering images according to claim 11.
